# EUROPEAN PATENT SPECIFICATION

(11) **EP 0 685 670 B1**
(45) Date of publication and mention of the grant of the patent: **08.12.1999**
(21) Application number: 95303733.0
(22) Date of filing: 31.05.1995
(51) Int. Cl.: F16K 11/074, F16K 11/065

(54) **Slide valve**
Absperrschieber
Vanne d'arrêt

(30) Priority: 04.06.1994 GB 9411230
(43) Date of publication of application: 06.12.1995
(73) Proprietor: IMI NORGREN LIMITED, Lichfield Staffordshire, WS13 6SB (GB)
(72) Inventor: Harrold, Martyn John, Lower Quinton, Warwickshire, CV37 8PJ (GB)
(74) Representative: Lane, Michael John

(56) References cited:
- EP-A- 0 324 698
- GB-A- 2 127 940
- US-A- 3 872 889
- US-A- 4 340 203

## Description

This invention relates to fluid flow control valves and more particularly to so-called "slide valves" for use especially, but not exclusively, in compressed air installations.

In compressed air installations, it is common practice to include one or more two-way (i.e. "on" or "off") isolating stop valves that are normally in their "on" position, i.e. when the installation is operational, but that can, when necessary, be manually turned off in order to isolate the upstream or downstream section of the installation for servicing purposes. Clearly, the or each section that requires servicing must be depressurised and, for that reason, the isolating valve, when in its "off" position, acts not only to interrupt the compressed air supply but also to exhaust air in the relevant section to atmosphere. Hitherto, a ball valve has commonly been used for that purpose. Such valves are, however, relatively expensive to produce because of the close tolerances required in the machining/moulding of the ball closure and the part-spherical seats associated with it.

Some years ago, we introduced, as a more cost-effective alternative, a two-way slide valve, the essential features of which are recited in the pre-characterising clause of claim 1 hereof. The moveable vane of such valve incorporates an exhaust passageway terminating in an outlet orifice defined by the vane such that, in the valve's "off" position, the exhaust passageway is brought into communication with the upstream or downstream side, as desired, of the installation whereby air exhausts from one or the other side of the installation via the exhaust passageway and the outlet orifice. However, such valve has the disadvantage that it is not possible to fit an exhaust silencer or to pipe the exhaust air to a remote location. The present invention provides a two-way slide valve that overcomes that disadvantage by modifying our prior above-mentioned valve so that the outlet orifice for exhaust air is located in the valve body rather than in the vane.

US patent No 4340203 describes a slide valve wherein, in one position, pressurised fluid at one of its ports can exhaust to atmosphere through an orifice defined in the valve body. However, the valve is a spring-biased, three-way valve and as such is of a quite different type and design from that with which the present invention is concerned.

EPA 0324698, US patent No 3872889 and GB 2127940 also describe valves which in one position permit the exhaust of fluid through an orifice defined in the valve body. However, all of those are rotary disc valves, as distinct from slide valves, and so again are of a quite different type and design from that with which the present invention is concerned.

According to the present invention, there is provided a two-way fluid flow slide valve comprising:
a) first and second body parts secured together and defining, respectively, first and second, substantially central fluid flow passageways, said body parts further defining between them a cavity into which said fluid flow passageways open in register with one another,
b) first and second substantially annular seals carried by said body parts and which surround said first and second fluid flow passageways respectively where they open into the cavity,
c) a vane mounted in said cavity in abutment with said seals and having opposed ends that project from the cavity beyond the confines of said body parts, said vane having an orifice therethrough and being slidable, by the application of manual force to the appropriate one or other of said ends, within said cavity and thus laterally relative to said fluid flow passageways between a valve-open position in which said orifice in the vane is in register with said fluid flow passageways thereby permitting fluid to flow between said fluid flow passageways and a valve-closed position in which said orifice is wholly out of register with said fluid flow passageways whereby the vane prevents the flow of fluid therebetween, and
d) a fluid exhaust passageway in said vane, which fluid exhaust passageway is, in the valve-open position, isolated from said fluid flow passageways but which, in the valve-closed position, connects one or other of said fluid flow passageways to atmosphere,
*characterised in that* said first body part also has a further fluid exhaust passageway formed therein, said further fluid exhaust passageway having a first end that opens into said cavity adjacent to said first fluid flow passageway and a second end that opens to atmosphere, *in that* said first end of said further fluid exhaust passageway, where it opens into said cavity, is surrounded by a third, substantially annular seal carried by said first body part and with which the vane abuts, said third seal being unitary with said seal associated with the first fluid flow passageway so that there is a section common to the seals located between said first fluid flow passageway and the further fluid exhaust passageway where they open into the cavity *and in that* the fluid exhaust passageway in said vane comprises a channel formed in the surface thereof facing said first body part, said channel, in the valve-closed position, bridging said common section of the seals thereby to interconnect said first fluid flow passageway and said further fluid exhaust passageway so that fluid in said first fluid flow passageway will exhaust to atmosphere.

The vane may slide in linear fashion in the cavity, but preferably it is pivotally mounted by the body and thus moves in an arcuate path.

The surface channel formed in the vane may be straight, but it is preferably V-shaped for the reason explained later.

The second end of the fluid exhaust passageway formed in the body preferably comprises a threaded port whereby a silencer or pipe connector may be threadedly coupled thereto.

One embodiment of the invention will now be described in more detail, by way of example only, with reference to the accompanying drawings, in which:

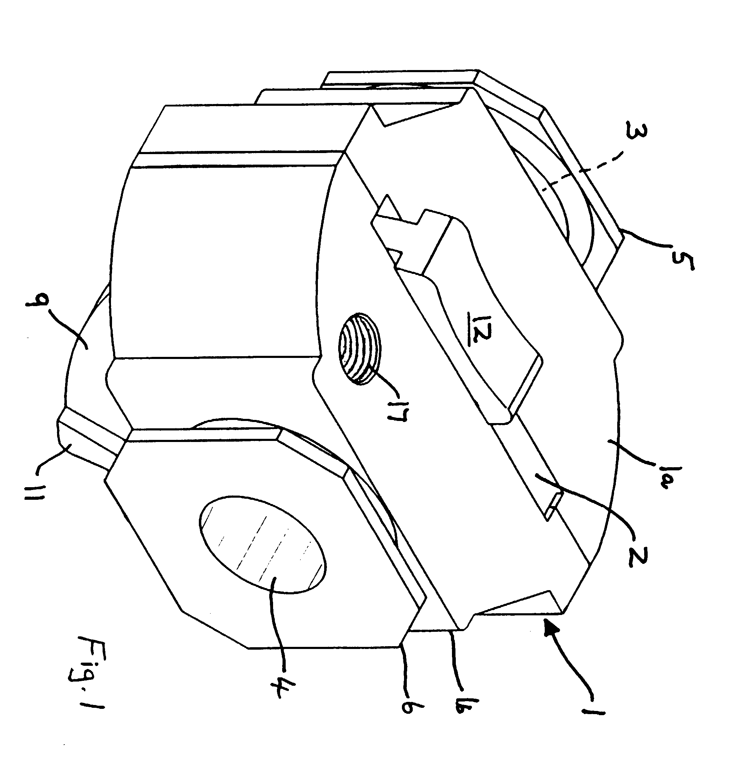

Fig. 1 is an isometric view of the valve in its closed position;
Fig. 2 is a plan view, partly in section, of the valve shown in Fig. 1, again showing the valve in its closed position;
Fig. 3 is a view on the line III-III of Fig. 2, again with the valve in its closed position; and
Fig. 4 is a similar view to that of Fig. 3 but showing the valve in its open position.

Referring to the drawings, the valve comprises a body 1 made in two halves la and 1b joined together by, for example, bolts (not shown). The two body halves 1a and 1b define centrally between them a generally rectangular cavity 2 from which extends, in the part 1a, a cylindrical inlet passageway 3 and, in the part 1b, a cylindrical outlet passageway 4. The inlet and outlet passageways 3, 4 terminate at their outer ends respectively in ported flanges 5 and 6 whereby the valve may be incorporated downstream, for example, of a filter, lubricator, regulator assembly (not shown) of a compressed air installation using suitable clamping devices. The two opposed faces of the body parts 1a and 1b have respective annular recesses formed in them circumscribing passageways 3 and 4 and in which rubber seals 7 and 8 respectively are located.

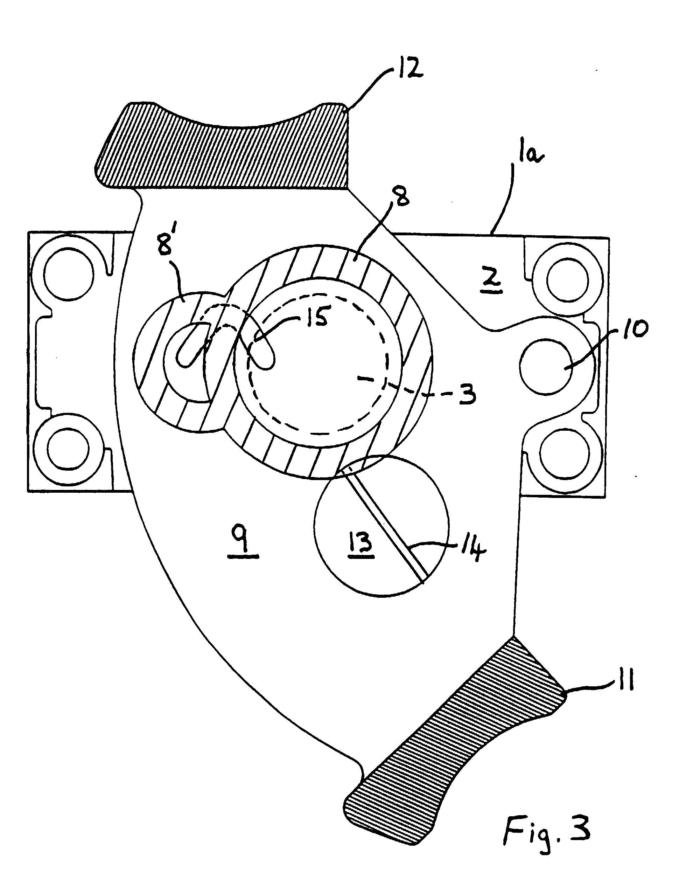

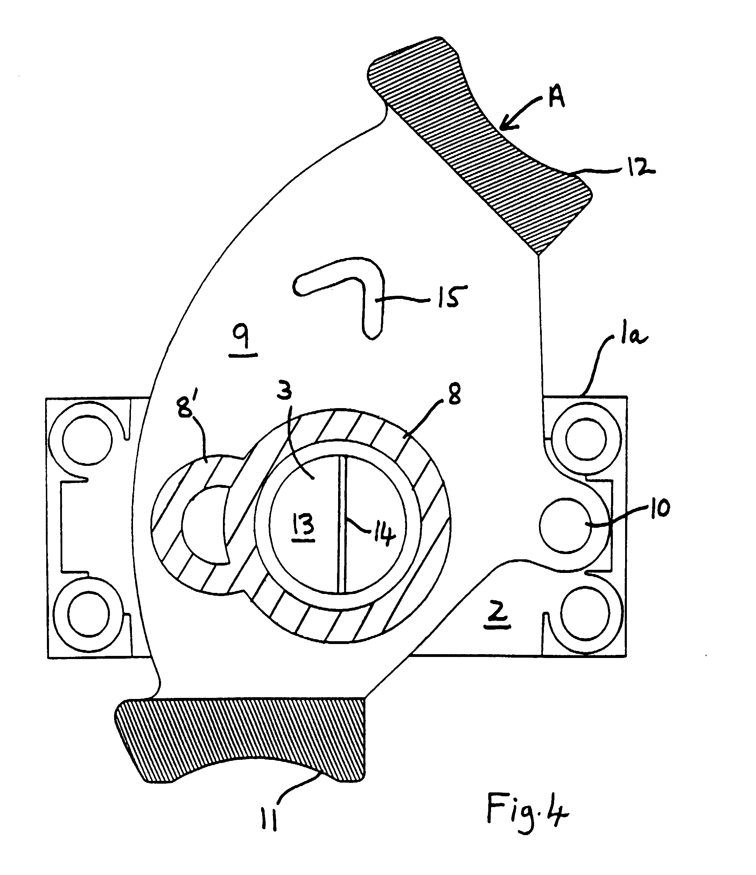

The cavity 2 has a vane 9 pivotally mounted, at 10, in it, the extremities 11, 12 thereof being enlarged in order to facilitate manual actuation of the valve. The vane 9 has an aperture 13 formed through it, whose overall diameter corresponds to that of the passageways 3 and 4, and which is divided into two substantially semicircular sections by a member 14. The surface of the vane 9 facing the body part 1b is further formed with a V-shaped exhaust channel 15 which, when the valve is in its closed position (as is described in more detail below) connects the outlet passageway 4 to an exhaust passageway 16 formed in the body part 1b, the passageway 16 terminating in a threaded exhaust port 17 with which a silencer or exhaust pipe-line connector (not shown) may be engaged. The entrance to the exhaust passageway 16 is surrounded by a seal 8' which in fact is formed integrally with the seal 8 and which sits in an annular recess formed in the body part 1b. Figs. 3 and 4 show, in section, the seals 8 and 8' which, as can be seen, are in the shape of a figure 8 and which, for stability, may comprise an elastomer, such as a nitrile rubber, bonded to a steel insert.

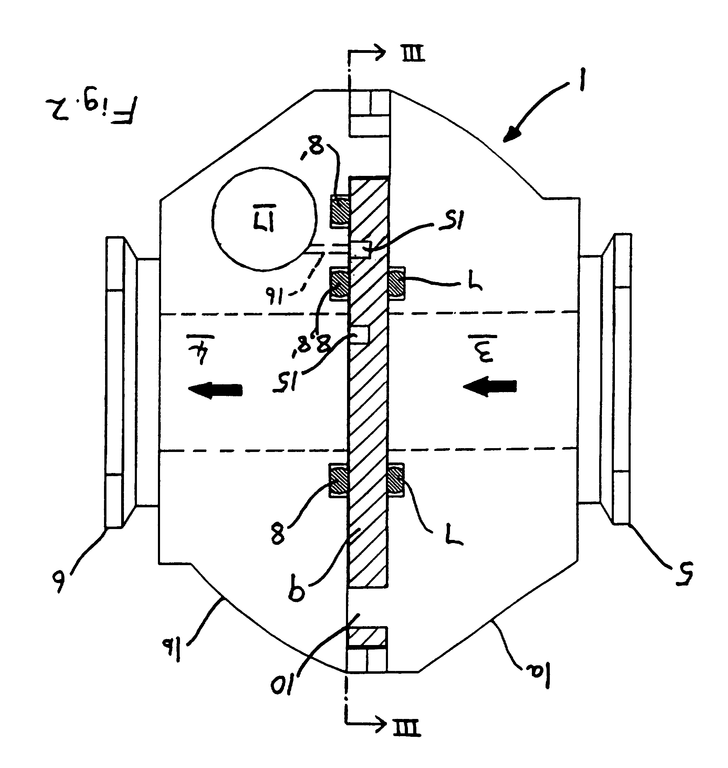

The valve operates as follows. Referring specifically to Fig. 4, this shows the valve in its open position with the aperture 13 in complete register with the passageways 3 and 4. The seals 7 and 8, which are slightly compressed by the vane 9, ensure that the path between the passageways 3 and 4 is fluid-tight. The valve may be closed by depressing the enlarged end 12, as shown by the arrow A in Fig. 4, whereupon the vane 9 pivots about the mount 10 in a downward direction. In the closed position, the V-shaped channel 15 interconnects the outlet passageway 4 with the exhaust passageway 16 formed in the body part 1b and hence with the atmosphere, whereas the inlet passageway 3 is closed off by the vane 9 - see Figs. 2 and 3. Accordingly, compressed air in the outlet (downstream) side of the installation will exhaust to atmosphere.

Whilst the exhaust channel 15 could, in principle, be straight, we have found it preferable to make it V-shaped so that, during movement of the vane 9, the seal 8' is always adequately supported and will not be dislodged by the differential air pressure across it which could otherwise interfere with smooth movement of the vane 9. The member 14 extending diametrically of the aperture 13 serves a similar purpose. Further, the V-shaped channel 15 is disposed on the surface of the vane 9 relative to the aperture 13 such that the inlet passageway 3 will be substantially completely closed off before the channel 15 interconnects the outlet passageway 4 with the exhaust passageway 16.

As will be appreciated, the valve specifically described above could be arranged to exhaust the inlet (upstream) side of a compressed air or other fluid supply installation, if desired. Further, the V-shaped channel 15 could, in an alternative construction (not shown), communicate with a small through-bore formed in the vane 9 through which the exhaust air passes to atmosphere via the further exhaust passageway formed in the valve body.

Finally, and as is conventional, the vane 9 may be formed with a pair of peripheral apertures (not shown) that enables the valve to be locked in its open or closed position, as the case may be, by means of a padlock or other locking device.

## Claims

1. A two-way fluid flow slide valve comprising:
a) first and second body parts (1b,1a) secured together and defining, respectively, first and second, substantially central fluid flow passageways (4,3), said body parts (1a,1b) further defining between them a cavity (2) into which said fluid flow passageways (3,4) open in register with one another,
b) first and second substantially annular seals (7,8) carried by said body parts (1a,1b) and which surround said first and second fluid flow passageways (3,4) respectively where they open into the cavity (2),
c) a vane (9) mounted in said cavity (2) in abutment with said seals (7,8) and having opposed ends (11,12) that project from the cavity (2) beyond the confines of said body parts (1a,1b), said vane (9) having an orifice (13) therethrough and being slidable, by the application of manual force to the appropriate one or other of said ends (11,12), within said cavity (2) and thus laterally relative to said fluid flow passageways (3,4) between a valve-open position in which said orifice (13) in the vane (9) is in register with said fluid flow passageways (3,4) thereby permitting fluid to flow between said fluid flow passageways (3,4) and a valve-closed position in which said orifice (13) is wholly out of register with said fluid flow passageways (3,4) whereby the vane (9) prevents the flow of fluid therebetween, and
d) a fluid exhaust passageway in said vane (9), which fluid exhaust passageway is, in the valve-open position, isolated from said fluid flow passageways (3,4) but which, in the valve-closed position, connects one or other of said fluid flow passageways (3,4) to atmosphere,
*characterised in that* said first body part (1b) also has a further fluid exhaust passageway (16) formed therein, said further fluid exhaust passageway (16) having a first end that opens into said cavity (2) adjacent to said first fluid flow passageway (4) and a second end (17) that opens to atmosphere, *in that* said first end of said further fluid exhaust passageway (16), where it opens into said cavity (2), is surrounded by a third, substantially annular seal (8') carried by said first body part (1b) and with which the vane (9) abuts, said third seal (8') being unitary with said second seal (8) so that there is a section common to the seals (8,8') located between said first fluid flow passageway (4) and the further fluid exhaust passageway (16) where they open into the cavity (2) *and in that* the fluid exhaust passageway in said vane (9) comprises a channel (15) formed in the surface thereof facing said first body part (1b), said channel (15), in the valve-closed position, bridging said common section of the seals (8,8') thereby to interconnect said first fluid flow passageway (4) and said further fluid exhaust passageway (16) so that fluid in said first fluid flow passageway (4) will exhaust to atmosphere.

2. A slide valve according to claim 1 wherein the vane (9) is pivotally mounted in the body (1) and thus slides within the cavity (2) in an arcuate path.

3. A slide valve according to claims 1 or claim 2 wherein the channel (15) in the vane (9) is substantially V-shaped.

4. A slide valve according to any one of claims 1 to 3 wherein the said second end of the further fluid exhaust passageway (16) comprises a threaded port (17) whereby a silencer or pipe connector may be threadedly coupled thereto.

## Patentansprüche

1. Zweiwegefluidströmungsgleitventil mit:
a) einem ersten und einem zweiten Körperteil (1b, 1a), die aneinander gesichert sind und jeweils einen ersten beziehungsweise einen zweiten im wesentlichen zentralen Fluidströmungsdurchtritt (4, 3) definieren, wobei die Körperteile (1a, 1b) des weiteren zwischen ihnen eine Aushöhlung (2) definieren, zu der die Fluidströmungsdurchtritte (3, 4) sich einander deckend offen sind
b) einer ersten und einer zweiten im wesentlichen kreisartigen Dichtung (7, 8), die durch die Körperteile (1a, 1b) getragen werden und die den ersten und den zweiten Fluidströmungsdurchtritt (3, 4) jeweils dort umgeben, wo diese zu der Aushöhlung (2) offen sind,
c) einem Flansch (9), der in der Aushöhlung (2) in Anlage an den Dichtungen (7, 8) montiert ist und entgegengesetzte Enden (11, 12) hat, die von der Aushöhlung (2) über die Begrenzungen der Körperteile (1a, 1b) vorstehen, wobei der Flansch (9) eine Öffnung (13) durch ihn hindurch hat und durch ein Aufbringen einer manuellen Kraft an dem geeigneten einen oder anderen Ende (11, 12) innerhalb der Aushöhlung (2) und somit seitlich relativ zu den Fluidströmungsdurchtritten (3, 4) zwischen einer offenen Ventilposition, in der sich die Öffnung (13) in dem Flansch (9) mit den Fluidströmungsdurchtritten (3, 4) deckt ist, wodurch ein Strömen eines Fluides zwischen den Fluidströmungsdurchtritten (3, 4) möglich ist, und einer geschlossenen Ventilposition, in der sich die Öffnung (13) überhaupt nicht mit den Fluidströmungsdurchtritten (3, 4) deckt ist, wodurch der Flansch (9) das Strömen des Fluides zwischen ihnen verhindert, gleitfähig ist, und
d) einem Fluidauslaßdurchtritt in dem Flansch (9), wobei dieser Fluidauslaßdurchtritt in der offenen Ventilposition von den Fluidströmungsdurchtritten (3, 4) isoliert ist, aber in der geschlossenen Ventilposition den einen oder den anderen Fluidströmungsdurchtritt (3, 4) mit der Umgebung verbindet,
**dadurch gekennzeichnet, daß**
das erste Körperteil (1b) ebenfalls einen weiteren Fluidauslaßdurchtritt (16) in ihm ausgebildet hat, wobei der weitere Fluidauslaßdurchtritt (16) ein erstes Ende, das zu der Aushöhlung (2) benachbart zu dem ersten Fluidströmungsdurchtritt (4) offen ist, und ein zweites Ende (17), das zu der Umgebung offen ist, hat,
das erste Ende des weiteren Fluidauslaßdurchtrittes (16) dort, wo es zu der Aushöhlung (2) offen ist, von einer dritten im wesentlichen kreisartigen Dichtung (8') umgeben ist, die durch das erste Körperteil (1b) getragen wird und an der der Flansch (9) anliegt, wobei die dritte Dichtung (8') mit der zweiten Dichtung (8) so einstückig ist, daß sich ein für die Dichtungen (8, 8') gemeinsamer Abschnitt ergibt, der sich zwischen dem ersten Fluidströmungsdurchtritt (4) und dem weiteren Fluidauslaßdurchtritt (16) dort befindet, wo sie zu der Aushöhlung (2) offen sind, und
der Fluidauslaßdurchtritt in dem Flansch (9) einen Kanal (15) aufweist, der in dessen zu dem ersten Körperteil (1b) hin gewandten Oberfläche ausgebildet ist, wobei der Kanal (15) in der geschlossenen Ventilposition den gemeinsamen Abschnitt der Dichtungen (8, 8') überbrückt, wodurch der erste Fluidströmungsdurchtritt (4) und der weitere Fluidauslaßdurchtritt (16) miteinander verbunden werden, so daß das Fluid in dem ersten Fluidströmungsdurchtritt (4) zu der Umgebung heraustritt.

2. Gleitventil gemäß Anspruch 1, wobei
der Flansch (9) an dem Körper (1) drehbar montiert ist und somit innerhalb der Aushöhlung (2) in einer gewölbten Bahn gleitet.

3. Gleitventil gemäß Anspruch 1 oder Anspruch 2, wobei
der Kanal (15) in dem Flansch (9) im wesentlichen V-förmig ist.

4. Gleitventil gemäß einem der Ansprüche 1 bis 3, wobei
das zweite Ende des weiteren Fluidauslaßdurchtrittes (16) eine mit einem Gewinde versehene Öffnung (17) aufweist, wodurch ein Dämpfer oder ein Rohrverbindungsstück gewindeartig daran gekuppelt werden kann.

## Revendications

1. Soupape coulissante de débit de fluide à deux voies comprenant :
a) des première et seconde parties de corps (1b, 1a) solidarisées et définissant, respectivement, des premier et second passages d'écoulement de fluide sensiblement centraux (4, 3), lesdites parties de corps (1a, 1b) définissant, de plus, entre elles une cavité (2) dans laquelle lesdits passages d'écoulement de fluide (3, 4) débouchent en correspondance mutuelle ;
b) des premier et second joints d'étanchéité sensiblement annulaires (7, 8) portés par lesdites parties de corps (la, 1b) et entourant respectivement lesdits premier et second passages d'écoulement de fluide (3, 4) à l'endroit où ils débouchent dans la cavité (2) ;
c) une palette (9) montée dans ladite cavité (2) en butée contre lesdits joints d'étanchéité (7, 8) et possédant des extrémités opposées (11, 12) se projetant à partir de la cavité (2) au-delà des limites desdites parties de corps (la, 1b), ladite palette (9) possédant un orifice (13) traversant et coulissant, par l'application d'une force manuelle sur l'extrémité adaptée ou l'autre desdites extrémités (11, 12) dans ladite cavité et ainsi, de façon latérale, par rapport auxdits passages d'écoulement de fluide (3, 4) entre une position d'ouverture de soupape dans laquelle ledit orifice (13) dans ladite palette (9) est aligné avec lesdits passages d'écoulement de fluide (3, 4), permettant ainsi un écoulement du fluide entre lesdits passages d'écoulement de fluide (3, 4), et une position de fermeture de soupape dans laquelle ledit orifice (13) est entièrement décalé desdits passages d'écoulement de fluide (3, 4), la palette (9) empêchant un passage du fluide entre eux ; et
d) un passage d'échappement de fluide dans ladite palette (9), passage d'échappement de fluide qui est, dans la position d'ouverture de soupape, isolé desdits passages d'écoulement de fluide (3, 4) mais qui, dans la position de fermeture de soupape, raccorde l'un ou l'autre desdits passages d'écoulement de fluide (3, 4) à l'atmosphère ;
caractérisé en ce que ladite première partie de corps (1b) possède, de même, un passage supplémentaire d'échappement de fluide (16) formé dedans, ledit passage supplémentaire d'échappement de fluide (16) possédant une première extrémité débouchant dans ladite cavité (2) à proximité immédiate dudit premier passage d'écoulement de fluide (4) et une seconde extrémité (17) débouchant dans l'atmosphère, en ce que ladite première extrémité dudit passage supplémentaire d'échappement de fluide (16) où il débouche dans ladite cavité (2), est entourée par un troisième joint d'étanchéité sensiblement annulaire (8') porté par ladite première partie de corps (1b) et en butée contre la palette (9), ledit troisième joint d'étanchéité (8') étant unitaire avec ledit second joint d'étanchéité (8) de telle façon qu'il existe une section commune aux joints d'étanchéité (8, 8') située entre ledit premier passage d'écoulement de fluide (4) et le passage supplémentaire d'échappement de fluide (16) où ils débouchent dans la cavité (2), et en ce que le passage d'échappement de fluide dans ladite palette (9) comprend un canal (15) formé dans sa surface faisant face à ladite première partie de corps (1b), ledit canal (15), dans la position de fermeture de soupape, pontant ladite section commune des joints d'étanchéité (8, 8') afin de raccorder ainsi ledit premier passage d'écoulement de fluide (4) et ledit passage supplémentaire d'échappement de fluide (16) de telle façon que du fluide dans ledit premier passage d'écoulement de fluide (4) s'échappe dans l'atmosphère.

2. Soupape coulissante selon la revendication 1, dans laquelle la palette (9) est montée pivotante dans le corps (1) et coulisse ainsi dans la cavité (2) selon un trajet en arc.

3. Soupape coulissante selon la revendication 1 ou 2, dans laquelle le canal (15) dans la palette (9) a une forme sensiblement en V.

4. Soupape coulissante selon l'une quelconque des revendications 1 à 3, dans laquelle ladite seconde extrémité du passage supplémentaire d'échappement de fluide (16) comprend un orifice taraudé (17), un silencieux ou un raccord de conduite pouvant y être couplé par vissage.
